(19) Europäisches Patentamt
European Patent Office
Office européen des brevets

(11) Numéro de publication: **0 169 098 B1**

# (12) FASCICULE DE BREVET EUROPEEN

(45) Date de publication du fascicule du brevet: **24.08.88**

(51) Int. Cl.⁴: **C 08 L 83/04**, C 09 D 3/82, D 21 H 1/40, D 21 H 3/62, C 08 J 3/02

(21) Numéro de dépôt: **85401123.6**

(22) Date de dépôt: **07.06.85**

(54) **Compositions d'émulsions aqueuses pour le traitement antiadhérent et hydrofuge de matériaux cellulosiques.**

(30) Priorité: **12.06.84 FR 8409107**

(43) Date de publication de la demande: **22.01.86 Bulletin 86/4**

(45) Mention de la délivrance du brevet: **24.08.88 Bulletin 88/34**

(84) Etats contractants désignés: **AT BE CH DE FR GB IT LI LU NL SE**

(56) Documents cités:
**FR - A - 2 466 493**
**FR - A - 2 482 614**
**GB - A - 908 988**
**GB - A - 2 016 494**
**US - A - 4 423 095**

**Le dossier contient des informations techniques présentées postérieurement au dépôt de la demande et ne figurant pas dans le présent fascicule.**

(73) Titulaire: **RHONE-POULENC CHIMIE, 25, quai Paul Doumer, F-92408 Courbevoie Cédex (FR)**

(72) Inventeur: **Fau, Alain, 18, Chemin du Grand Bois, F-69160 Tassin-la-Demi-Lune (FR)**

(74) Mandataire: **Seugnet, Jean Louis et al, RHONE-POULENC INTERSERVICES Service Brevets Chimie Centre de Recherches de Saint-Fons B.P. 62, F-69192 Saint-Fons Cédex (FR)**

EP 0 169 098 B1

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

ACTORUM AG

## Description

La présente invention a pour objet des compositions se présentant sous la forme d'émulsions aqueuses et renfermant des polymères organosiliciques ainsi que des polymères organiques. Ces compositions sont utilisables pour l'obtention de revêtements antiadhérents et/ou hydrofuges sur des substrats (supports) divers, en particulier sur des matériaux cellulosiques.

Des compositions se présentant sous forme d'émulsions aqueuses (appelées par la suite compositions d'emulsions aqueuses) renfermant des polymères organosiliciques, seuls ou en mélange avec des composése ou des polymères organiques, sont connues depuis longtemps. Elles figurent en particulier dans la demande japonaise 72 23 325, les brevets américains 4 127 460, 4 288 356, les brevets français 2 401 195, 2 419 961.

La demande japonaise 72 23 325 décrit une composition comprenant une huile diorganopolysiloxanique bloquée à chaque extrémité de sa chaine par un radical hydroxyle lié à un atome de silicium, un méthylhydrogénopolysiloxane, une carboxyméthylcellulose, un monoéther d'un polyalcoylèneglycol, un agent tensio-actif, un sel d'étain tel que le dilaurate de dibutylétain et de l'eau.

Cette composition s'étale facilement sur les papiers surfacés avec des polyoléfines et elle conduit à un revêtement résistant au frottement.

Le brevet américain 4 127 460 décrit une composition renfermant un alkylhydrogénopolysiloxane, une amine tertiaire polyacrylatée liquide, au moins partiellement neutralisée par un acide, un photosensibilisateur, un agent émulsifiant et de l'eau. Cette composition durcit par exposition aux radiations ultraviolettes; le revêtement en découlant adhère efficacement à la surface de papiers supercalandrés.

Le brevet français 2 401 195 se rapporte à une composition comprenant un diorganopolysiloxane de viscosité 50 000 à 500 000 mPa.s à 25 °C, bloqué à chaque extrémité de sa chaine par un radical hydroxyle lié à un atome de silicium, contenant de 0,1 à 4% en poids de radicaux vinyles liés aux atomes de silicium de sa chaine, ou un diorganopolysiloxane du même type mais bloqué à chaque extrémité de sa chaine par un motif diorganovinylsiloxy, un organohydogénopolysiloxane, une silice colloidale, un agent émulsifiant, une quantité catalytique d'un dérivé du platine et de l'eau.

Cette composition une fois déposée sur le papier, se transforme par chauffage en un revêtement dont le caractère antiadhérent est amélioré vis à vis des adhésifs de contact.

La demande française 2 419 961 a trait à une composition comprenant un diorganopolysiloxane liquide, de viscosité 1500 à 24 000 mPa.s à 25 °C, bloqué à chaque extrémité de sa chaine par un radical hydroxyle lié à un atome de silicium, contenant de préférence de 0,1 à 2% en poids de radicaux vinyles liés aux atomes de silicium de sa chaine, un organohydrogénopolysiloxane, un ou plusieurs agents émulsifiants, un catalyseur choisi parmi les dérivés du platine et les sels d'étain d'acides carboxyliques, et de l'eau.

Cette demande enseigne dans le cas de l'emploi de sels d'étain comme catalyseurs de durcissement, qu'il est nécessaire de mettre en œuvre un système à 3 composants, comprenant l'émulsion du diorganopolysiloxane hydroxylé, l'émulsion de l'organohydrogénopolysiloxane et l'émulsion du sel d'étain. Ces trois émulsions sont seulement mélangées au moment de l'emploi. Elle enseigne encore que l'émulsion du diorganopolysiloxane hydroxylé utilise, comme agent émulsifiant, un alcool polyvinylique et celle de l'organohydrogénopolysiloxane, un alkylphénol polyoxyéthyléné.

Cette composition peut durcir à froid ou à chaud.

Le brevet américain 4 288 356 se rapporte à une émulsion aqueuse qui conduit à un revêtement élastomérique après dépôt sur un substrat tel que le papier. Cette émulsion est formée par mélange

- d'une émulsion aqueuse d'un diorganopolysiloxane bloqué à chaque extrémité de sa chaine par un radical hydroxyle lié à un atome de silicium, de poids moléculaire d'au moine 5000, préparé par polymérisation en émulsion à l'aide d'un catalyseur anionique;
- d'une émulsion aqueuse égalment préparée par polymérisation en émulsion d'un mélange de monomères à insaturation vinylique constitué de 1 à 7% en poids d'un monomère organosilicique tel que le vinyltriéthoxysilane et 93 à 99% en poids d'un monomère organique tel que le styrène, le méthacrylate de méthyle, le chlorure de vinyle;
- d'une émulsion aqueuse d'un sel d'organoétain;
- d'un silane à groupes hydrolysables agissant comme agent réticulant, tel que le méthyltriméthoxysilane.

Le brevet enseigne qu'il est essentiel que le mélange des trois émulsions soit neutre, ou légèrement basique avant l'introduction du silane à groupes hydrolysables.

L'ensemble des documents commentés ci-avant montre donc qu'il est possible d'obtenir à partir des compositions se présentant sous forme d'émulsions aqueuses et renfermant des polymèrs organopolysiloxaniques et éventuellement des polymères organiques, des revêtements antiadhérents de bonne qualité sur de nombreux substrats et en particulier sur des matériaux cellulosiques.

Ces documents n'enseignent pas, cependant, les moyens à utiliser pour préparer une composition d'émulsion aqueuse, stable au stockage et au cisaillement, renfermant conjointement un diorganopolysiloxane terminé à chaque extrémité de sa chaine par un radical SiOH, un organohydrogénopolysiloxane et un polymère organique. En outre, ils n'enseignent pas, au cours de l'application d'une composition d'émulsion aqueuse sur la surface de substrats à traiter:

– les moyens à utiliser pour limiter ou même éviter la pénétration de la composition d'émulsion

aqueuse dans la masse de matériaux poreux tels que les matériaux cellulosiques

– les moyens à utiliser pour éviter une évaporation trop rapide de l'eau de l'émulsion (un départ d'eau mal contrôlé entraine parfois la formation d'hétérogénéités dans le revêtement antiadhérent formé).

De même ils n'enseignent pas les moyens à utiliser pour préparer des compositions d'émulsions aqueuses qui permettent à la fois d'hydrofuger et de rendre antiadhérents (directement sur les machines à fabriquer le papier) des papiers grossièrement raffinés non blanchis; ces papiers renferment encore des quantités non négligeables de produits inhibant des catalyseurs de durcissement sensibles tels que les dérivés du platine.

Ils n'enseignement pas, enfin, les moyens à utiliser pour obtenir, à partir de compositions d'émulsions aqueuses, des revêtements conservant des propriétés hydrofuges et antiadhérentes dans le même temps, sur un large domaine de températures allant par exemple de −100 °C à 300 °C. On peut trouver des températures très basses dans les appareils frigorifiques employés pour la surgélation d'aliments et des températures très élevées dans les fours à micro-ondes employés pour la cuisson rapide d'aliments. Lorsque les aliments sont emballés dans du papier, il est indispensable que celui-ci non seulement résiste à ces traitements rigoureux mais en outre, possède, après retour à la température ambiante des aliments, un caractère antiadhérent suffisant pour se détacher, sans se déchirer, des aliments.

Dans ce qui suit, sauf mentions contraires, les parties ou pourcentages indiqués sont en poids.

La présente invention propose des compositions d'émulsions aqueuses ayant les propriétés recherchées décrites ci-avant; elle a donc pour objet des compositions d'émulsions aqueuses de ce type, stables au stockage, utilisables pour le traitement antiadhérent et/ou hydrofuge de substrats en particulier de matériaux cellulosiques; elles sont caractérisées en ce qu'elles renferment

(A) – 100 parties d'une hulie diorganopolysiloxanique de formule:

$$HO(SiR_2O)_nH$$

dans laquelle les symboles R, identiques ou différents, représentent chacun un radical alkyle ayant de 1 à 3 atomes de carbone, le radical trifluoro-3, 3, 3 propyle, le radical vinyle, au moins 50% des radicaux représentés par R sont des radicaux méthyles et au plus 5% sont des radicaux vinyles, le symbole n représente un nombre quelconque ayant une valeur telle que la viscosité du polymère se trouve dans la plage 500 à 50 000 mPa.s à 25 °C.

(B) – 15 à 60 parties d'une résine constituée de motifs choisis dans le groupe de ceux de formules $R'SiO_{1,5}$, $R'_2SiO_{0,5}$ dans lesquelles les symboles R', identiques ou différents, représentent chacun un radical alcoyle ayant de 1 à 3 atomes de carbone, le radical vinyle, au moins 70% des radicaux representés par les symboles R' sont des radicaux méthyles, et les motifs sont répartis de manière à conduire à un rapport R'/Si allant de 1,05 à 1,85.

(C) – 3 à 25 parties d'un organohydrogénopolysiloxane liquide ayant au moins 3 atomes d'hydrogène liés aux atomes de silicium, par molécule, les groupes organiques liés aux atomes de silicium étant choisi parmi les radicaux représentés par le symbole R' décrit précédemment sous (B), au moins 80% des ces radicaux sont des radicaux méthyles

(D) – 0,05 à 6 parties d'un agent épaississant choisi parmi les polysaccarides obtenus par fermentation de glucides au moyen d'un microorganisme du genre Xanthomonas

(E) – 10 à 70 parties d'un polyacétate de vinyle homo ou copolymère

(F) – 2 à 20 parties d'un alcool polyvinylique

(G) – 0,1 à 10 parties d'un agent émulsifiant non ionique choisi dnas le groupe formé des alkylphénols polyoxyéthylénés

– 60 à 800 parties d'eau.

L'huile diorganopolysiloxanique (A) de viscosité 500 à 50 000 mPa.s à 25 °C, de préférence 700 à 45 000 mPa.s à 25 °C, est un polymère linéaire constitué, comme le montre la formule précitée $HO(SiR_2O)_nH$, d'une succession de motifs diorganosiloxy de formule $SiR_2O$; toutefois, le présence de motifs monoorganosiloxy de formule $RSiO_{1,5}$ et/ou de motifs siloxy de formule $SiO_2$, n'est pas exclue dans la proportion d'au plus 2% par rapport au nombre total de motifs diorganosiloxy. Les radicaux alkyles ayant de 1 à 3 atomes de carbone, représentés par les symboles R, englobent les radicaux méthyles, éthyles, n-propyles.

A titre d'exemples concrets de motifs représentés par la formule $R_2SiO$, peuvent être cités ceux de formules: $(CH_3)_2SiO$, $CH_3(CH_2=CH)SiO$, $CF_3CH_2CH_2(CH_3)SiO$, $CH_3(C_2H_5)SiO$.

Ces motifs et ceux pouvant encore être cités en faisant varier la signification du symbole R, ne sont pas répartis d'une manière quelconque; en effet, leur répartition au sein des polymères A obéit aux exigences précédemment établies. Ainsi, au moins 50%, de préférence au moins 60% des radicaux représentés par R sont des radicaux méthyles et au plus 5%, de préférence au plus 4%, sont des radicaux vinyles.

Il doit être compris, selon une variante de l'invention, que l'on peut utiliser comme polymères (A) un mélange de polymères qui diffèrent entre eux par leur poids moléculaire moyen et/ou la nature des groupements liés aux atomes de silicium.

Les polymères (A) sont commercialisés par les fabricants de silicones; en outre, ils peuvent être aisément fabriqués. L'une des techniques de fabrication les plus courantes consiste, dans une première phase, à polymériser des diorganocyclopolysiloxanes à l'aide de quantités catalytiques d'agents alcalins ou acides puis à traiter les polymérisats avec des quantités calculées d'eau (brevets français 1 134 005, 1 198 749, 1 226 745); cet apport d'eau qui est d'autant plus élevé que les polymères à préparer ont une viscosité plus faible, peut être remplacé en totalité ou en partie par des huiles diorganopolysiloxaniques bloquées à chaque extrémité de leur chaîne par un radical SiOH, de faible viscosité, par exemple allant de 5 à 200 mPa.s à 25 °C, ayant un taux élevé de radicaux hydroxyles, par exemple 3 à 14%.

De préférence les polymères (A) sont des diméthylpolysiloxanes, bloqués à chaque extrémité de leur chaine par un radical SiOH, de viscosité 800 à 30 000 mPa.s à 25 °C.

Les résines (B) sont utilisées à raison de 15 à 60 parties, de préférence 17 à 55 parties, pour 100 parties des diorganopolysiloxanes (A). Ce sont des copolymères constitués de motifs choisis parmi ceux de formules $SiO_2$, $R'SiO_{1,5}$, $R'_3SiO_{0,5}$ dans lesquelles les symboles R', identiques ou différents, représentent chacun un radical hydrocarboné ayant de 1 à 3 atomes de carbone tels que méthyle, éthyle, n-propyle, vinyle, au moins 70% de préférence au moins 75% des radicaux représentés par le symbole R' sont des radicaux méthyles; en outre, ces résines renferment en poids au moins 0,2% de préférence au moins 0,3% de radicaux hydroxyles liés aux atomes de silicium. La répartition des motifs précités est telle que ces résines ont un rapport R'/Si allant de 1,05 à 1,85, de préférence allant de 1,1 à 1,80.

Les résines (B) sont de préférence des produits liquides dont la viscosité peut varier de 50 à 100 000 mPa.s à 25 °C; toutefois, elles peuvent être introduites dans les compositions d'émulsions de l'invention sous la forme de solutions dans les solvants organiques usuels des résines silicones. Ces solvants sont généralement choisis parmi le toluène, le xylène, le cyclohexane, le méthylcyclohexane, l'acétate de n-butyle. La concentration pondérale des résines (B) dans ces solutions peut être comprise dans un large intervalle de valeurs par exemple 15 à 80%.

La préparation de ces résines est bien connue; elle consiste généralement à cohydrolyser des organochlorosilanes choisis dans le groupe constitué de ceux de formules $SiCl_4$, $R'SiCl_3$, $R'_2SiCl_2$ et $R'_3SiCl$, la cohydrolyse ayant lieu, ou non, en présence de solvants non miscibles avec l'eau. Cependant, l'addition, au début ou au cours de l'hydrolyse, de faibles proportions de diluants miscibles avec l'eau, tels l'éthanol, le n-propanol, l'isopropanol. le n-butanol (en association ou non avec l'acétone, le dioxane-1,4) n'est pas exclue.

En opérant selon les techniques précitées, on prépare plus spécialement des résines choisies dans les 4 groupes de celles renfermant les motifs ci-après:

(1) $R'SiO_{1,5}$ et $R'_2SiO$
(2) $R'SiO_{1,5}$ et $R'_3SiO_{0,5}$
(3) $R'SiO_{1,5}$, $R'_2SiO$ et $R'_3SiO_{0,5}$
(4) $SiO_2$, $R'SiO_{1,5}$, $R'_2SiO$ et $R'_3SiO_{0,5}$

Dans le dernier groupe (4) les motifs $SiO_2$ représentent en nombre au plus 8% de l'ensemble des 4 motifs $SiO_2$, $R'SiO_{1,5}$, $R'_2SiO$ et $R'_3SiO_{0,5}$. De préférence, on utilise les résines liquides constituées

– de motifs de formules $CH_3SiO_{1,5}$ et $(CH_3)_2SiO$ présentant un rapport $CH_3/Si$ allant de 1,1 à 1,6 ayant une viscosité comprise entre 1000 et 30 000 mPa.s à 25 °C et contenant de 0,8 à 3,5% de radicaux hydroxyles liés aux atomes de silicium;

– de motifs de formules $(CH_3)_3SiO_{0,5}$, $(CH_3)_2SiO$ et $CH_3SiO_{1,5}$ présentant un rapport $CH_3/Si$ allant de 1,6 à 1,85, ayant une viscosité de 50 à 800 mPa.s à 25 °C et contenant de 0,3 à 3% de radicaux hydroxyles liés aux atomes de silicium.

Ces résines sont commercialisées par les fabricants de silicones; elles peuvent en outre être aisément fabriquées en suivant les techniques de cohydrolyse figurant plus spécialement dans les brevets français 1 226 745, 1 408 662, 2 429 811 et 2 521 574.

L'organohydrogénopolysiloxane (C) est utilisé à raison de 3 à 25 parties, de préférence 3,5 à 22 parties pour 100 parties des diorganopolysiloxanes (A); il doit posséder au moins trois groupes SiH par molécule.

Il répond plus précisément à la formule générale moyenne

$$R'_xH_ySiO_{\frac{4-x-y}{2}}$$

dans laquelle le symbole R' représente un radical méthyle, éthyle, n-propyle, vinyle, au moins 80% de préférence au moins 85% des radicaux R' sont méthyles.

Le symbole x représente un nombre quelconque allant de 1 à 1,99 le symbole y représente un nombre quelconque allant de 0,1 à 1, la somme x+y allant de 1,7 à 2,6. De préférence sont utilisés comme organohydrogénopolysiloxanes (C) des méthylhydrogénopolysiloxanes.

Les organohydrogénopolysiloxanes (C) sont disponibles sur le marché des silicones, de plus leurs techniques de préparation sont maintenant bien au point. L'une des techniques les plus utilisées consiste, dans un premier temps, à cohydrolyser des mélanges appropriés constitués de chlorosilanes choisis parmi ceux de formules $R'_3SiCl$, $R'_2SiCl_2$, $R'SiCl_3$, $SiCl_4$, $HR'_2SiCl$, $HR'SiCl_2$, $HSiCl_3$. Par mélanges appropriés doivent être compris des mélanges qui renferment chacun, par atome de silicium, un nombre de radicaux R' et un nombre d'atomes d'hydrogène coïncidant respectivement avec les valeurs représentées par les symboles x et y de la formule générale moyenne, la somme de ces nombres devant également coïncider avec les valeurs permises pour la somme x + y.

Dans un deuxième temps les cohydrolysats sont portés à une température allant de 80 à 220 °C de préférence en présence d'agents acides tels que l'acide sulfurique, les terres activées par un acide. Lors de ce chauffage il se produit un réarrangement des liaisons siloxaniques ainsi que la condensation des groupes SiOH. Ces transformations conduisent aux polymères organohydrogénopolysiloxaniques (C) qui possèdent ainsi, en fonction des mélanges de chlorosilanes de départ, des structures linéaires, cycliques ou ramifiées.

Parmi les polymères linéaires peuvent être cités, à titre illustratif, ceux pépondant aux formules suivantes:

$(CH_3)_3Si[OSiH(CH_3)]_gOSi(CH_3)_3$,
$H(CH_3)_2Si[OSiH(CH_3)]_gOSi(CH_3)_2H$
$(CH_3)_3Si[OSiH(CH_3)]_g[OSi(CH_3)_2]_h$-$OSi(CH_3)_3$
$H(CH_3)_2Si[OSiH(CH_3)]_g[OSi(CH_3)_2]_h$-$OSi(CH_3)_2H$
$(CH_3)_2C_2H_5[OSi(CH_3)H]_pOSi(CH_3)_3$
$(CH_3)_3Si[OSi(CH_3)H]_p[OSi(CH_3)C_2H_5]_q$-$OSi(CH_3)_3$
$(CH_3)_2C_2H_5Si[OSi(CH_3)H]_pOSiC_2H_5(CH_3)_2$
$(CH_3)_2(n.C_3H_7)Si[OSi(CH_3)H]_p$-$OSi(n.C_3H_7)CH_3)_2$
$(CH_3)_3Si[OSi(C_2H_5)H]_{p'}[OSi(CH_3)_2]_{q'}$-$OSi(CH_3)_3$
$(CH_3)_3Si[OSi(CH_3)H]_p[OSi(CH_3)CH=CH_2]_qOSi(CH_3)_3$
$(CH_3)_2CH_2=CHSi[OSi(CH_3)H]_pOSiCH=CH_2(CH_3)_2$

dans lesquelles le symbole g représente un nombre quelconque allant de 3 à 120, h un nombre quelconque allant de 1 à 50, p un nombre quelconque allant de 6 à 60, p' un nombre quelconque allant de 3 à 15, q un nombre quelconque allant de 1 à 10, q' un nombre quelconque allant de 7 à 40.

Ces polymères linéaires possèdent généralement une viscosité peu élevée, elle 'échelonne par exemple de 5 mPa.s à 500 mPa.s à 25 °C.

Parmi les polymères cycliques peuvent être cités à titre illustratif ceux répondant auc formules suivantes:

$[OSi(CH_3)H]_4$, $[OSi(CH_3)H]_5$, $[OSi(CH_3)H]_6$, $[OSi(CH_3)H]_3$,

$$\left[[OSi(CH_3)H]_3[OSi(CH=CH_2)CH_3]\right],$$

$[OSi(C_2H_5)H]_3$.

Quant aux polymères ramifiés ils sont constitués chacun d'une combinaison de motifs choisis parmi ceux de formules $R'_3SiO_{0,5}$, $R'_2SiO$, $R'SiO_{1,5}$, $SiO_2$, $HR'_2SiO_{0,5}$, $HR'SiO$, $HR'SiO_{1,5}$, chaque combinaison qui définit un polymère renferme au moins un motif choisi parmi ceux de formules $R'SiO_{1,5}$, $SiO_2$, $HSiO_{1,5}$, les motifs étant cependant répartis d'une manière telle que la formule moyenne, ramenée à un silicium, de chaque polymère est englobée dans la formule générale moyenne précitée.

La viscosité de ces polymères s'étale de 2 mPa.s à 25 °C à 10 000 mPa.s à 25 °C.

A titre d'exemples concrets de polymères ramifiés de faible viscosité, peuvent être cités:

– ceux répondant aux formules ci-après:
$CH_3Si[OSi(CH_3)_2H]_3$, $Si[OSi(CH_3)_2H]_4$
$HSi[OSi(CH_3)_3][OSi(CH_3)_2H]_2$, $n.C_3H_7Si[OSi(CH_3)_2H]_3$
$Si[OSi(CH_3)(C_2H_5)H][OSi(CH_3)_2H]_3$

– ceux constitués de motifs $SiO_2$ et $H(CH_3)_2SiO_{0,5}$ de rapport $CH_3$/Si 1 à 1,5.

L'agent épaississant (D) est utilisé à raison de 0,03 à 6 parties, de préférence 0,04 à 5,5 parties pour 100 parties des diorganopolysiloxanes (A). Il est choisi parmi les polysaccharides obtenus par fermentation de glucides au moyen d'un microorganisme de genre Xanthomonas.

Ces polysaccharides sont des polymères linéaires de haut poids moléculaire, généralement supérieur à 1 million, issus de la fermentation, en milieu aqueux de produits choisis, par exemple, dans le groupe constitué du glucose, du saccharose, du cérulose, du fructuose, du maltose, du lactose, de l'amidon soluble, de l'amidon de pomme de terre, de l'amidon de mais.

Au milieu de fermentation sont ajoutés des dérivés du phosphore, du magnésium. Egalement une source d'azote doit être présente dans le milieu sous forme de produits organiques (brevets américains 3 000 790, 3 271 267, 3 355 447, brevet français 2 414 555) ou de produits minéraux (brevet américain 3 391 060, brevet français 2 342 339).

Diverses espèces du genre Xanthomonas peuvent être employées pour la fabrication de ces polysaccharides telles que le Xanthomonas Begoniae, le Xanthomonas Incanae, le Xanthomonas Pisi et plus spécialement le Xanthomonas Campestris.

Les techniques de fabrication de ces polysaccharides sont connues depuis de nombreuses années; celles figurant dans les brevets américains et français (cités précédemment pour l'emploi d'une source d'azote), sont assez récentes et de ce fait peuvent être avantageusement suivies. En particulier la technique décrite dans le brevet français 2 415 555 permet d'obtenir des polysaccharides donnant en solution dans l'eau des gels facilement filtrables.

Le polyacétate de vinyle (E) est utilisé à raison de 10 à 70 parties, de préférence 12 à 65 parties, pour 100 parties des diorganopolysiloxanes (A). On peut choisir un polyacétate de vinyle homopolymère ou copolymère, les monomères à copolymériser avec l'acétate de vinyle étant des esters vinyliques d'acides monocarboxyliques saturés, ramifiés ou non, ayant de 1 à 12 atomes de carbone, comme le propionate, le «Versatate» (marque déposée pour des esters d'acides ramifiés en $C_9$–$C_{11}$), le pivalate, le laurate de vinyle et/ou des esters d'acides insaturés mono- ou dicarboxyliques possédant 3 à 6 atomes de carbone et d'alcools possédant 1 à 10 atomes de carbone, comme les acrylates, méthacrylates, maléates, fumarates de méthyle, d'éthyle, de butyle, d'éthylhexyle.

Les comonomères sont mis en œuvre en quantités telles que la température de transition vitreuse du polymère obtenu soit comprise entre −20 et 50 °C er de préférence entre −10 et 35 °C.

Ces homo et copolymères sont préparés par polymérisation en émulsion aqueuse: ils sont trés finement dispersés à l'état de globules et leur concentration dans les émulsions aqueuses est de l'ordre de 30 à 65% en poids. Ces émulsions de latex de polyacétate de vinyle conduisent normalement, après dépôt sur divers substrats solides, à des revêtements filmogènes ayant une bonne résistance au vieillissement à l'air et une perméabilité élevée à la vapeur d'eau.

L'alcool polyvinylique (F) est utilisé à raison de 2 à 20 parties, de préférence 2,5 à 18 parties, pour 100 parties des diorganopolysiloxanes (A).

C'est un produit solide pulvérulent qui peut présenter encore des groupes acétates; généralement le pourcentage d'hydrolyse est élevé, dépassant 85%.

L'agent émulsifiant non-ionique (G) est utilisé à raison de 0,1 à 10 parties, de préférence 0,15 à 9 parties pour 100 parties des diorganopolysiloxanes (A). Il est choisi dans le groupe des alkylphénols polyoxyéthylénés; le radical alkyle, linéaire ou ramifié, comporte de 1 à 15 atomes de carbone. A titre indicatif le radical alkyle peut être un radical méthyle, butyle, éthyl-2 hexyle, n-octyle, nonyle, undécyle, dodécyle.

Le nombre de motifs de formule $CH_2CH_2O$ dans l'enchaînement polyoxyéthyléné a une grande influence sur les propriétés émulsifiantes des alkylphénols polyoxyéthylénés; il est de préférence supérieur à 5 et inférieur à 30. On peut utiliser un mélange formé de plusieurs agents émulsifiants (G) dans lequel les agents émulsifiants diffèrent les uns des autres uniquement par le nombre de motifs $CH_2CH_2O$.

L'eau est utilisée à raison de 60 à 800 parties, de préférence 70 à 750 parties pour 100 parties des diorganopolysiloxanes (A). On peut ainsi préparer des compositions d'émulsions aqueuses renfermant par exemple de 15 à 85% d'extraits secs, de préférence 20 à 80%. Il nest pas tellement souhaitable de préparer des émulsions en dehors des concentrations ci-avant; en effect, si elles sont trop diluées, cela rend plus coûteux leur conditionnement et transport, d'autre part si elles sont trop concentrées cela peut provoquer à long terme un début de destruction des émulsions par séparation d'un ou plusieurs de ses constituants.

Les compositions d'émulsions aqueuses faisant l'objet de l'invention peuvent être obtenues de differentes manières.

La présente invention vise également un procédé préférentiel de préparation desdites compositions. Ce procédé est caractérisé en ce qu'il consiste:

– à préparer une émulsion $S_1$ par passage dans un broyeur à colloïdes, d'un mélange comportant l'huile diorganopolysiloxanique (A), la résine organopolysiloxanique (B), l'agent épaississant (D), l'alcool polyvinylique (F), une fraction de l'agent émulsifiant non ionique (G) et de l'eau;

– à préparer une émulsion $S_2$ par passage, dans un broyeur à colloïdes, d'un mélange comportant l'organohydrogénopolysiloxane (C), la fraction restante de l'agent émulsifiant non ionique (G) et de l'eau;

– à mélanger intimement l'émulsion $S_1$, l'émulsion $S_2$ et une émulsion aqueuse du polyacétate de vinyle (E).

La préparation des émulsions $S_1$ et $S_2$ ne présente pas de difficultés particulières.

En particulier pour fabriquer l'émulsion $S_1$, on peut ajouter dans un prémélangeur, en suivant l'ordre indiqué précédemment les différents constituants (A), (B), (D), (F), (G) et de l'eau. On peut également dans une première phase, dissoudre dans l'eau les produits solides pulvérulents comprenant l'alcool polyvinylique (F) et l'agent épaississant (D) et ensuite après obtention d'une solution, ajouter l'huile diorganopolysiloxanique (A), la résine (B) et l'agent émulsifiant (G). Ce mélange est émulsifié puis dilué, si besoin est, avec de l'eau à la concentration désirée.

La fraction de l'agent émulsifiant (G) utilisée pour la fabrication de l'émulsion $S_1$, représente (exprimée en pourcentage pondéral de la quantité totale de l'agent émulsifiant (G) introduite dans les compositions d'émulsions aqueuses conformes à l'invention) une valeur allant de 15 à 70%, de préférence de 18 à 65%.

Pour ce qui concerne la préparation de l'émulsion $S_2$, laquelle contient seulment l'organohydrogénopolysiloxane (C) et la fraction restante de l'agent émulsifiant (G), (cette fraction représente 15 à 70% de la quantité totale utilisée) on introduit comme déjà indiqué ces 2 constituants avec de l'eau dans un prémélangeur puis émulsifie l'ensemble et dilue si besoin est avec de l'eau à la concentration désirée.

Pour obtenir les compositions d'émulsions aqueuses conformes à l'invention, il suffit alors de mélanger par simple agitation l'émulsion $S_1$, l'émulsion $S_2$ et l'émulsion renfermant le polyacétate de vinyle E.

La concentration en eau des compositions d'émulsions aqueuses est, comme déjà indiqué, assez variable dépendant de l'application ultérieure envisagées et des contraintes provenant, par exemple, des modes de transport et de stockage.

Les compositions d'émulsions aqueuses sont très stables au stockage; il en résulte qu'il ne se produit pas de dégagement d'hydrogène au cours de leurs stockages prolongés, dans des récipients clos, à des températures l'ordre de 40 °C et audessus. Il ne se produit pas, en outre, de séparation de leurs constituants se manifestant bien souvent par la présence d'agglomérats crémeux à leur surface.

Les compositions sont utilisées ultérieurement pour conférer un caractère hydrofuge et/ou antiadhérent aux matériaux solides de toute nature, et plus spécialement aux matériaux cellulosiques tels que le papier, le carton.

Cependant pour mettre en œuvre ces compositions, il est nécessaire de leur ajouter une quantité catalytiquement efficace d'un catalyseur de la réaction SiH/SiOH, de préférence sous la forme d'une émulsion aqueuse, qui est choisi généralement dans le groupe constitué des dérivés organiques ce l'étain.

La présente invention vise donc également une composition prête à l'emploi utilisable pour le traitement antiadhérent et/ou hydrofuge de substrats, constituée d'une composition d'émulsion aqueuse conforme à l'invention et d'une quantité catalytiquement efficace d'un catalyseur de la réaction SiH/SiOH.

Comme dérivés de l'étain peuvent être utilisés:

1) les sels d'organoétain d'acides mono ou polycarboxyliques tels que le dilaurate de dibutylétain ou de dioctylétain, le di(éthyl-2 hexanoate) de dibutylétain ou de dioctylétain, le diacétate de dibutylétain ou de dioctylétain, l'éthyl-2 hexanoate de tributylétain. l'acétate de tributylétain, le laurate de tributylétain, le succinate de dibutylétain, le maléate de dioctylétain.

2) Les composés de formule $T_2Sn.(S.CH_2COOT)_2$ dans laquelle les symboles T, identiques ou différents, représentent des radicaux alcoyles ayant de 3 à 20 atomes de carbone, tels que les radicaux propyle, butyle, hexyle, octyle, isooctyle, décyle, dodécyle, octadécyle. A titre illustratif ces composés peuvent répondre aux formules

$(n.C_4H_9)_2Sn(SCH_2COO\text{–iso–}C_8H_{17})_2$ et

$(n.C_8H_{17})_2Sn(SCH_2COOiso\text{–}C_8H_{17})_2$.

La préparation de tels composés figure par exemple dans le brevet canadien 846 201 et les brevets français 1 477 892 et 1 488 631.

3) Les polymères à enchaînements –Ti–OSn– préparés par réaction de titanates d'alcoyle (le radical alcoyle ayant de 3 à 10 atomes de carbone) avec les sels d'organoétain d'acides mono ou polycarboxyliques précédemment cités. De tels polymères figurent dans le brevet français 1 392 648 et le brevet anglais 928 496.

Pour introduire ce catalyseur dans les compositions d'émulsions aqueuses, il est recommandé de le disperser préalablement au sein d'une émulsion aqueuse. On arrive facilement à ce résultat en utilisant les techniques mises en œuvre précédemment pour la préparation des émulsions $S_1$ et $S_2$. Ainsi on peut mélanger préalablement de l'alcool polyvinylique, le sel d'étain choisi et de l'eau et ensuite émulsifier le mélange ainsi formé à l'aide d'un broyeur à colloïdes. Le broyat peut être dilué avec de l'eau à la concentration désirée de manière à obtenir une émulsion renfermant par exemple de 8 à 70% de sel d'étain, de préférence de 10 à 65%.

L'émulsion de sel d'étain est ajoutée, aux compositions d'émulsions aqueuses, en quantité suffisante pour fournir de 1,5 à 12 parties de sel d'étain, de préférance de 2 à 10 parties, pour 100 parties des diorganopolysiloxanes (A); exprimé en étain métal cela correspond sensiblement à 0,10 à 2,5 parties, de préférence 0,15 à 2,2 parties d'étain, pour 100 parties des diorganopolysiloxanes (A).

Les compositions d'émulsions aqueuses catalysées sont stables pendant au moins 48 herues à la température ambiante; de ce fait, elles peuvent séjourner dans les bacs des machines d'enduction pendant au moins 2 journées de travail consécutives.

Elles peuvent être appliqués à l'aide des dispositifs utilisés sur les machines industrielles d'enduction du papier tels que les systèmes à lames d'air, à barre égalisatrice . . . Une fois déposées sur les supports, les compositions d'émulsions aqueuses sont durcies en quelques secondes par circulation dans des fourstunnels chauffés vers 80 °C–220 °C; le temps de passage dans ces fours se situe généralement entre 3 et 20 s, il est fonction pour une longueur donnée des fours, de la vitesse à laquelle circulent les supports.

Il faut compter de 10 à 20 s vers 100–130 °C pour obtenir un revêtement correctement enduit. Dans cette durée est comprise la fraction de temps nécessaire à l'évaporation de l'eau, cette fraction est souvent supérieure à 1/2.

Les quantités de compositions déposées sur les supports sont variables, elles dépendent du taux en extraits secs des compositions et des propriétés hydrofuges et antiadhérentes recherchées; il est souhaitable que les quantités déposées fournissent de 0,3 à 1,2 g d'extraits secs pour un $m^2$ de surface à traiter.

Les extraits secs sont formés des composés introduits c'est-à-dire des constituants (A), (B), (C), (D), (E), (F), (G) et du sel d'étain et/ou des produits de réaction de ces composés; le pourcentage en poids provenant des polymères organosiliciques (A), (B), (C) est de l'ordre de 65 à 90% et celui provenant du polyacétate de vinyle (E) de l'ordre de 8 à 25%.

Les revêtements ainsi obtenus confèrent aux supports sur lesquels ils sont appliqués de très bonnes propriétés antiadhérentes et hydrofuges qui se conservent dans le temps. Ces revêtements résistent bien au frottement, de ce fait ils ne sont pas enlevés par abrasion lors du passage de leurs feuilles (ou bandes)-supports sur les cylindres de renvoi des machines d'enduction ou d'adhésivation, cylindres constitués de matériaux dont les surfaces sont plus ou moins rugueuses.

Les compositions d'émulsions aqueusas conformes à l'invention peuvent être appliqués sur tous les substrats qui seront ultérieurement en contact par exemple avec des substances collantes et/ou libérant de l'humidité. Ces substrats peuvent comprendre les diverses variétés de papier (comme le papier Kraft dont le degré de raffinage peut être quelconque, le papier cristal, les papiers sulfurisés) les cartons, le parchemin végétal, les papiers enduits de polyéthylène ou de carboxyméthylcellulose, les feuilles en cellulose régénérée (comme la cellophane) ou en polyacétate de cellulose, les feuilles en matières plastiques telles celles en polyéthylène, polypropylène, polytéréphtalate d'éthyle, les feuilles en métal, les tissus à base de fibres synthétiques, de verre ou d'amiante, les matériaux fibreux non-tissés qu'ils soient à base de fibres cellulosiques ou de fibres synthétiques ou d'un mélange de ces fibres.

La pésente invention vise donc un procédé d'enduction de ces substrats pour les rendre antiadhérents et/ou hydrofuges et les substrats ainsi enduits.

Les matériaux rendus ainsi antiadhérents sont utilisées comme intercalaires, supports séparateurs, papiers et pellicules pour transferts et emballages de matières collantes telles que la confiserie, la patisserie, les caoutchoucs crus, les brais et bitumes, les cires ou de matières alimentaires libérant de l'humidité telles que le poisson, la viande, le fromage.

En particulier, les papiers enduits peuvent servir pour l'emballage d'aliments surgelés; les aliments n'adhérent pas à leur emballage même après une durée de stockage d'un an ou plus à des températures pouvant s'abaisser jusqu'à −70%. En outre ces emballages peuvent subir sans se désagréger, les contraintes des techniques de cuisson rapide des aliments surgelés (température de l'ordre de 300 °C dans les fours à micro-ondes, cuisson à la vapeur); ces techniques sont mises en œuvre par exemple dans les restaurants à grands débits des supermarchés.

Toutes ces qualités decoulent évidemment du choix des divers constituants entrant dans les compositions d'émulsions aqueuses de l'invention; elle découlent également du procédé de préparation de ces compositions. Plus précisément:

– le groupe constitué des huiles diorganopolysiloxanique (A), de la résine organopolysiloxanique (B), et de l'organohydrogénopolysiloxane (C) apporte le caractère hydrofuge et antiadhérent recherché;

– l'épaississement (D) d'une part, procure aux compositions d'émulsions aqueuses un état pseudoplastique qui les empêche de trop pénétrer à l'intérieur des substrats, et principalement de ceux qui sont poreux et, d'autre part, permet à ces compositions une rétention d'eau couvenable pendant la formation des revêtements ce qui a pour effet d'obtenir des revêtements homogènes, parfaitement réticulés;

– le polyacétate de vinyle (E) renforce encore le caractère hydrofuge des revêtements.

L'exemple suivant illustre l'invention:

Exemple

a) On mélange intimement les constituants ci-après:

– 100 parties d'un méthylhydrogénopolysiloxane bloqué à chaque extrémité de sa chaine par un motif triméthylsiloxyle, de viscosité 40 mPa.s à 25 °C;

– 8 parties d'un mélange pondéral 70/30 de deux nonylphénols polyoxyéthylénés, l'un ayant 10 motifs $OCH_2CH_2$ et l'autre 20 motifs $OCH_2CH_2$;

– 15,4 parties d'eau;

– 0,5 partie d'une solution aqueuse à 40% d'acide acétique.

Ce mélange est émulsifié par passage dans un broyeur à colloïdes. Le broyat est dilué par addition de 43 parties d'eau; l'émulsion obtenue renferme 60% de méthylhydrogénopolysiloxane.

b) On mélange intimement les constituants ci-après:

– 231 parties d'eau;

– 20 parties d'un alcool polyvinylique ayant un indice de saponification de 140 et présentant en solution à 4% dans l'eau une viscosité de 25 mPa.s à 25 °C;

– 0,5 partie d'une poudre blanche, de qualité alimentaire, commercialisés sous le nom de Rhodigel 23; c'est un polysaccharide issu de la fermentation de glucides au moyen de Xanthomonas Campestris. Le procédé de préparation de ce polysaccharide figure dans le brevet français 2 414 555. Ensuite on ajoute à ce mélange:

– 1,5 partie du mélange pondéral 70/30 des 2 nonylphénols polyoxyéthylénés utilisés sous a);

– 120 parties d'une résine liquide constituée de motifs $CH_3SiO_{1,5}$ et $(CH_3)_2SiO$ répartis de manière à obtenir un rapport $CH_3/Si$ de 1,3, ayant un taux d'hydroxyle de 1,8%, de viscosité 10 000 mPa.s à 25 °C;

– 250 parties d'une huile diméthylpolysiloxanique bloquée à chaque extrémité de sa chaine par un radical hydroxyle, de viscosité 5000 mPa.s à 25 °C.

L'ensemble est finement émulsifié par passage dans un broyeur à colloïdes. On dilue le broyat par addition de 156 parties d'eau et incorpore dans le broyat dilué, par simple agitation:

– 150 parties d'une émulsion aqueuse contenant 50% en poids de polyacétate de vinyle, commercialisée sous le nom de RHODOPAS A 206, ayant une viscosité Brookfield, a 50 tours/minute, inférieure à 150 mPa.s à 25 °C (température de transition vitreuse: 35 °C);

– 50 parties de l'émulsion préparée sous a);

– 20 parties de monopropylèneglycol.

La composition d'émulsion aqueuse ainsi formée est très stable au stockage; en particulier, elle ne montre pas, après un abandon de 6 mois à 40 °C en récipient clos, de pertes significatives de groupes SiH.

c) On mélange intimement les constituants ci-après:

– 38 parties de dilaurate de di(n-octyl)étain;

– 2 parties de l'alcool polyvinylique utilisée sous b)

– 0,1 partie d'acide acétique

– 5 parties d'eau.

L'ensemble est finement émulsifié par passage dans un broyeur à colloïdes. Le broyat est dilué par addition de 52 parties d'eau. On introduit ensuite, par simple agitation, 3 parties de monopropylèneglycol.

On obtient ainsi une émulsion cataysante.

d) On ajoute à 100 parties de la composition d'émulsion préparée sous c).

Cette émulsion catalysée est alors diluée par addition d'une quantité suffisante d'eau pour former un bain de traitement ayant 10% d'extraits secs.

Ce bain est déposé à raison de 8 g/m$^2$ sur un papier Kraft pesant 50 g/m$^2$, satiné en surface.

Le dépôt est effectué à l'aide d'une barre égalisatrice de Mayer, montée sur une machine industrielle d'enduction de papier.

Le film d'émulsion recouvrant le papier est simultanément séché et durci par passage pendant 15 secondes dans un four-tunnel chauffé, la température au niveau du papier étant de 110 °C.

On obtient ainsi un papier enduit possédant sur une face environ 0,8 g/m$^2$ d'un mince revêtement parfaitement réticulé.

e) On enveloppe de poisson fraichement pêché avec le papier traité selon d) – la face enduite

étant la face interne de l'emballage – et met l'ensemble dans un appareil frigorifique refroidi à −70 °C.

Après un mois de stockage dans l'appareil frigorifique, on constate que le poisson surgelé se détache facilement de son emballage.

On place ce poisson surgelé muni de son emballage, dans un four à micro-ondes et soumet l'ensemble à une température de 300 °C pendant quelques secondes. On constate que le papier supporte ce traitement et en outre, se détache facilement de la chair cuite du poisson.

f) On applique sur la face enduite du papier traité selon d), un ruban adhésif du type Sparadrap et maintient cette application pendant 24 heures sous une pression de 70 g/cm$^2$; la force nécessaire pour décoller ce ruban est ensuite mesurée à l'aide d'un dynamomètre, la vitesse de décollement étant de 25 cm/minute. On trouve une force de décollement de 5 g pour une largeur du ruban de 1 cm. Si on utilise une vitesse de décollement ultra rapide de 300 m/mm on trouve une force de décollement de 30 g pour une largeur de ruban de 1 cm.

## Revendications

1. Compositions d'émulsions aqueuses stables au stockage, utilisables pour le traitement antiadhérent et/ou hydrofuge de substrats, caractérisées en ce qu'elles renferment:

A. 100 parties d'une huile diorganopolysiloxanique de formule:

$$HO(SiR_2O)_nH$$

dans laquelle les symboles R, identiques ou différents, représentent chacun un radical alkyle ayant de 1 à 3 atomes de carbon, le radical trifluoro-3, 3, 3 propyle, le radical vinyle, au moins 50% des radicaux représentés par R sont des radicaux méthyles et au plus 5% sont des radicaux vinyles, le symbole n représente un nombre quelconque ayant une valeur telle que la viscosité du polymère se trouve dans la plage 500 à 50 000 mPa.s à 25 °C.

B. 15 à 60 parties d'une résine constituée de motifs choisis dans le groupe de ceux de formules $R'SiO_{1,5}$, $R'_2SiO$, $R'_3SiO_{0,5}$ dans lesquelles les symboles R', identiques ou différents, représentent chacun un radical alcoyle ayant de 1 à 3 atomes de carbone, le radical vinyle, au moins 70% des radicaux représentés par les symboles R' sont des radicaux méthyles, et les motifs sont répartis de manière à conduire à un rapport R'/Si allant de 1,05 à 1,85, la résine B contenant au moins 0,2% en poids de radicaux hydroxyle liés aux atomes de silicium, sous réserve que, dans le cas où la résine B présente à la fois des motifs $R'SiO_{1,5}$, $R'_2SiO$, $R'_3SiO_{0,5}$, il n'y ait pas plus de 8% en nombre de motifs $SiO_2$.

C. 3 à 25 parties d'un organohydrogénopolysiloxane liquide ayant au moins 3 atomes d'hydrogène liés aux atomes de silicium, par molécule, répondant à la formule générale moyenne:

$$R'_xH_ySiO_{\frac{4-x-y}{2}}$$

dans laquelle le symbole R' représente un radical méthyle, éthyle, n-propyle, vinyle, au moins 80% des radicaux R' sont méthyles, le symbols x représente un nombre quelconque allant de 1 à 1,99, le symbole y représente un nombre quelconque allant de 0,1 à 1, la somme x+y allant de 1,7 à 2,6.

D. 0,03 à 6 parties d'un agent épaississant choisi parmi les polysaccharides obtenus par fermentation de glucides au moyen d'un microorganisme du genre Xanthomonas.

E. 10 à 70 parties d'un polyacétate de vinyle homo ou copolymère permettant d'obtenir un polymère dont la température de transition vitreuse est comprise entre −20 et +50 °C.

F. 2 à 20 parties d'un alcool polyvinylique.

G. 0,1 à 10 parties d'un agent émulsifiant non ionique choisi dans le groupe formé des alkylphénols polyoxyéthylénés.

– 60 à 800 parties d'eau.

2. Procédé de préparation des compositions d'émulsions aqueuses selon la revendication 1, caractérisé en ce qu'il consiste:

– à préparer une émulsion $S_1$ par passage dans un broyeur à colloïdes, d'un mélange comportant l'huile diorganopolysiloxanique (A), la résine organopolysiloxanique (B), l'agent épaississant (D), l'alcool polyvinylique (F), une fraction de l'agent émulsifiant non ionique (G), représentant 15 à 70% de la quantité totale d'agent émulsifiant (G) introduite et de l'eau;

– à préparer une émulsion $S_2$ par passage dans un broyeur à colloïdes, d'un mélange comportant l'organohydrogénopolysiloxane (C), la fraction restante de l'agent émulsifiant non ionique (G) et de l'eau;

– à mélange intimement l'émulsion $S_1$, l'émulsion $S_2$ et une émulsion aqueuse du polyacétate de vinyle (E).

3. Procédé pour rendre antiadhérent et/ou hydrofuge un substrat, caractérisé en ce qu'on ajoute à une composition d'émulsion telle que définie à la revendication 1, une quantité catalytiquement efficace d'un catalyseur de la réaction SiH/SiOH, on applique en couche mince le mélange obtenu et on le réticule par chauffage.

4. Procédé selon la revendication 3, caractérisé en ce que le catalyseur est un sel d'étain ajouté sous la forme d'une émulsion aqueuse en quantité suffisante pour fournir 0,15 à 2,2 parties de sel d'étain exprimé en étain métal pour 100 parties des diorganopolysiloxanes (A).

5. Substrats enduits selon un procédé conforme aux revendications 3 et 4.

6. Composition prête à l'emploi utilisable pour le traitement antiadhérent et/ou hydrofuge de substrats, constituée d'une composition conforme à la revendication 1 et d'une quantité catalytiquement efficace d'un catalyseur de la réaction SiH/SiOH.

**Patentansprüche**

1. Wässrige, lagerbeständige Emulsionszusammensetzungen, verwendbar zur antihaftenden und/oder wasserabstossenden Behandlung von Substraten, dadurch gekennzeichnet, dass sie entahlten:

A. 100 Teile eines Diorganopolysiloxanöls der Formel

$$HO(SiR_2O)_nH$$

worin die Symbole R, die identisch oder verschieden sind, jeweils einen Alkylrest mit 1 bis 3 Kohlenstoffatomen, den 3, 3, 3-Trifluorpropylrest, den Vinylrest bedeuten, wobei wenigstens 50% der durch R wiedergegebenen Reste Methylreste sind und höchstens 5% Vinylreste sind, das Symbol n irgendeine Zahl bedeutet, die einen Wert derart hat, dass sich die Viskosität des Polymeren in dem Bereich von 500 bis 50 000 mPa.s bei 25 °C befindet;

B. 15 bis 60 Teile eines Harzes, bestehend aus Gruppierungen, ausgewählt aus der Gruppe solcher der Formeln $R'SiO_{1,5}$, $R'_2SiO$, $R'_3SiO_{0,5}$, worin die Symbole R', die identisch oder verschieden sind, jeweils einen Alkylrest mit 1 bis 3 Kohlenstoffatomen, den Vinylrest bedeuten, wobei mindestens 70% der durch die Symbole R' wiedergegebenen Reste Methylreste sind und die Gruppierungen derart verteilt sind, dass sie zu einem Verhältnis R'/Si von 1,05 bis 1,85 führen, wobei das Harz B mindestens 0,2 Gew.-% Hydroxylreste enthält, die an die Siliciumatome gebunden sind, mit der Massgabe, dass im Falle, wo das Harz B gleichzeitig Gruppierungen $R'SiO_{1,5}$, $R'_2SiO$, $R'_3SiO_{0,5}$ bedeutet, es nicht mehr als 8% in der Zahl an $SiO_2$-Gruppierungen hat;

C. 3 bis 25 Teile eines flüssigen Organohydrogenpolysiloxans mit mindestens 3 an Siliciumatome gebundenen Wasserstoffatomen pro Molekül, entsprechend der mittleren allgemeinen Formel

$$R'_xH_ySiO_{\frac{4-x-y}{2}}$$

worin das Symbol R' einen Methyl-, Ethyl-, n-Propyl-, Vinylrest bedeutet, wobei mindestens 80% des Reste R'Methylreste sind, das Symbol x irgendeine Zahl von 1 bis 1,99 bedeutet, das Symbol y irgendeine Zahl von 0,1 bis 1 bedeutet, wobei die Summe x+y von 1,7 bis 2,6 geht;

D. 0,03 bis 6 Teile eines Verdickungsmittels, ausgewählt unter den Polysacchariden, erhalten durch Fermentation von Gluciden mittels eines Mikroorganismus des Genus Xanthomonas;

E. 10 bis 70 Teile eines homo- oder copolymeren Polyvinylacetats, das es ermöglicht, ein Polymeres zu erhalten, dessen Glasübergangstemperatur zwischen −20 und +50 °C ist;

F. 2 bis 20 Teile eines Polyvinylalkohols;

G. 0,1 bis 10 Teile eines nicht-ionischen Emulgiermittels, ausgewählt aus der Gruppe, gebildet aus polyoxyethylenierten Alkylphenolen;

– 60 bis 800 Teile Wasser.

2. Verfahren zur Herstellung der wässrigen Emulsionszusammensetzungen gemäss Anspruch 1, dadurch gekennzeichnet, dass es darin besteht:

– eine Emulsion $S_1$ herzustellen durch Leiten eines Gemisches, enthaltend das Diorganopolysiloxanöl (A), das Organopolysiloxanharz (B), das Verdickungsmittel (D), den Polyvinylalkohol (F), eine Fraktion des nicht-ionischen Emulgiermittels (G), die 15 bis 70% der eingeführten Gesamtmenge des Emulgiermittels (G) bedeutet, und Wasser, in eine Kolloidmühle;

– eine Emulsion $S_2$ herzustellen durch Leiten eines Gemisches, enthaltend das Organohydrogenpolysiloxan (C), die restliche Fraktion des nichtionischen Emulgiermittels (G) und Wasser, in eine Kolloidmühle;

– die Emulsion $S_1$, die Emulsion $S_2$ und eine wässrige Emulsion des Polyvinylacetats (E) innig zu vermischen.

3. Verfahren, um ein Substrat antihaftend und/oder wasserabstossend zu machen, dadurch gekennzeichnet, dass man zu einer Emulsionszusammensetzung, wie sie in Anspruch 1 definiert ist, eine katalytisch wirksame Menge eines Katalysators der Reaktion SiH/SiOH zusetzt, das erhaltene Gemisch in dünner Schicht aufträgt und es durch Erhitzen vernetzt.

4. Verfahren gemäss Anspruch 3, dadurch gekennzeichnet, dass der Katalysator ein Zinnsalz ist, das in Form einer wässrigen Emulsion in hinreichender Menge zugesetzt wird, um 0,15 bis 2,2 Teile Zinnsalz, ausgedückt in Zinnmetall pro 100 Teile der Diorganopolysiloxane (A), zu liefern.

5. Substrate, überzogen gemäss den Ansprüchen 3 und 4.

6. Gebrauchsfertige Zusammensetzung, verwendbar zur antihaftenden und/oder wasserabstossenden Behandlung von Substraten, die aus einer Zusammensetzung gemäss Anspruch 1 und einer katalytischwirksamen Menge eines Katalysators der Reaktion SiH/SiOH besteht.

**Claims**

1. Aqueous emulsion compositions which are stable in storage and can be employed for antiadhesive and/or water-repellent treatment of substrates, characterized in that they contain:

A. 100 parts of a diorganopolysiloxane oil of formula:

$$HO(SiR_2O)_nH$$

in which each of the symbols R, which are identical or different, denotes an alkyl radical containing from 1 to 3 carbon atoms, the 3, 3, 3-trifluoropropyl radical, the vinyl radical, at least 50% of the radicals denoted by R are methyl radicals and at most 5% are vinyl radicals, the symbol n denotes any number the value of which is such that the viscosity of the polymer is in the range 500 to 50 000 mPa s at 25 °C,

B. 15 to 60 parts of a resin consisting of units chosen from the group of those of formulae $R'SiO_{1,5}$, $R'_2SiO$ and $R'_3SiO_{0,5}$, in which each of the

symbols R', which are identical or different, denotes an alkyl radical containing from 1 to 3 carbon atoms, the vinyl radical, at least 70% of the radicals denoted by the symbols R' are methyl radicals, and the units are distributed so as to result in a R'/Si ratio ranging from 1,05 to 1,85, the resin B containing at least 0,2% by weight of hydroxyl radicals linked to silicon atoms, provided that, in the case where the resin B has units $R'SiO_{1,5}$, $R'_2SiO$ and $R'_3SiO_{0,5}$ at the same time, there are numerically not more than 8% of units $SiO_2$.

C. 3 to 25 parts of a liquid organohydropolysiloxane containing at least 3 hydrogen atoms linked to the silicon atoms, per molecule, corresponding to the average general formula,

$$R'_xH_ySiO_{\frac{4-x-y}{2}}$$

in which the symbol R' denotes a methyl, ethyl, n-propyl or vinyl radical, and at least 80% of the radicals R' are methyls, the symbol x denotes any number from 1 to 1,99, and the symbol y denotes any number from 0,1 to 1, the sum x+y being from 1,7 to 2,6.

D. 0,03 to 6 parts of a thickening agent chosen from among the polysaccharides obtained by fermentation of carbohydrates with the aid of a microorganism of the genus Xanthomonas.

E. 10 to 70 parts of a polyvinyl acetate homo- or copolymer which makes it possible to obtain a polymer whose glass transition temperature is between −20 and +50 °C.

F. 2 to 20 parts of a polyvinyl alcool

G. 0,1 to 10 parts of a nonionic emulsifying agent chosen from the group consisting of polyoxyethylenated alkylphenols.

– 60 to 800 parts of water.

2. Process for the preparation of aqueous emulsion compositions according to Claim 1, characterized in that it consists:

– in preparing an emulsion $S_1$ by passing through a colloid mill a mixture comprising the diorganopolysiloxane oil (A), the organopolysiloxane resin (B), the thickening agent (D), the polyvinyl alcohol (F), a portion of the nonionic emulsifying agent (G), representing 15 to 70% of the total quantity of emulsifying agent (G) introduced, and water;

– in preparing an emulsion $S_2$ by passing through a colloid mill a mixture comprising the organohydropolysiloxane (C), the remaining portion of the nonionic emulsifying agent (G) and water;

– in intimately mixing emulsion $S_1$, emulsion $S_2$ and an aqueous emulsion of polyvinyl acetate (E).

3. Process for rendering a substrate antiadhesive and/or water-repellant, characterized in that a catalytically effective quantity of a catalyst for the SiH/SiOH reaction is added to an emulsion composition such as defined in Claim 1, and the mixture obtained is applied as a thin layer and is crosslinked by heating.

4. Process according to Claim 3, characterized in that the catalyst is a tin salt added in the form of an aqueous emulsion in sufficient quantity to provide 0,15 to 2,2 parts of tin salt expressed as tin metal per 100 parts of the diorganopolysiloxanes (A).

5. Substrates coated by using a process in accordance with Claims 3 to 4.

6. Ready-to-use composition which can be employed for the antiadhesive and/or water-repellent treatment of substrates composition consisting of a composition in accordance with Claim 1 and a catalytically effective quantity of a catalyst for the SiH/SiOH reaction.